# EUROPÄISCHE PATENTANMELDUNG

(11) **EP 1 142 950 A2**
(43) Veröffentlichungstag der Anmeldung: **10.10.2001**
(21) Anmeldenummer: 01108261.7
(22) Anmeldetag: 02.04.2001
(51) Int. Cl.: C08L 7/00

(54) **Vulkanisierbare Elastomermischung und Verfahren zur Herstellung eines Elastomeren**

(30) Priorität: 07.04.2000 DE 10017505
(71) Anmelder: Continental Aktiengesellschaft, 30165 Hannover (DE)
(72) Erfinder: Monroy, Victor M., Charotte, NC 28270-0427 (US); Well, Michael, Dr., 38159 Vechelde (DE)

(57) **Zusammenfassung**

Durch Verblenden eines halogensubstituierten kautschukelastischen Homo- oder Copolymeren mit einem Amino-Alkoxysilan und einem OH-Gruppen enthaltenden Füllstoff in der angegebenen Reihenfolge erhält man eine vulkanisierbare Elastomermischung, die zu Produkten mit besonders vorteilhaften Eigenschaften bezüglich bestimmter Modulen führt. Die durch das angegebene Verfahren erhaltenen Elastomerprodukte sind besonders geeignet bei der Verwendung in Fahrzeugluftreifen.

## Beschreibung

Die Erfindung betrifft eine vulkanisierbare Elastomermischung sowie ein Verfahren zur Herstellung eines Elastomeren, bei dem diese Elastomermischung verwendet wird.

Die Erfindung betrifft insbesondere das Gebiet der Herstellung von geeigneten Kautschuk-Elastomeren für Fahrzeugluftreifen.

Für die Reifenfertigung kommen seit einiger Zeit halogenierte Butylkautschuke zum Einsatz, die häufig speziell für bestimmte Aufgaben, z.B. luftundurchlässige Zwischenschichten, verwendet werden. Diese halogenierten bzw. teilweise halogenierten Kautschuke haben zwar ausgezeichnete Dämpfungseigenschaften, konnten sich jedoch als Material für die Laufflächen von Fahrzeugreifen deshalb noch nicht durchsetzen, weil sie neben ihren positiven Eigenschaften, wie guter Rollwiderstand und Naßrutschwiderstand, gleichzeitig ein schlechtes Abriebsverhalten zeigen.

Die Erfindung zielt daher darauf ab, eine weitere vulkanisierbare Elastomermischung für die Reifenfertigung bereitzustellen, die ein halogensubstituiertes kautschukelastisches Homo- oder Copolymer enthält und die insbesondere zu Elastomeren mit bestimmten verbesserten Reifen-Laufeigenschaften führt.

Diese Aufgabe wird erfindungsgemäß durch eine vulkanisierbare Elastomermischung gelöst, die herstellbar ist durch ein lösungsmittelfreies Verblenden wenigstens folgender Komponenten in der angegebenen Reihenfolge: a) eines halogensubstituierten kautschukelastischen Homo- oder Copolymers mit b) einem Aminoalkoxysilan mit wenigstens einer Aminogruppe je Molekül in einer Menge, daß das Verhältnis Amino- zu Halogen-Gruppen 1-100 Mol% ist, und c) einem OH-Gruppen enthaltenden Füllstoff.

Mit silikatischen Produkten wie Kieselsäure oder Silikaten gefüllte Kautschuk-Elastomere sind im Stand der Technik bereits bekannt. Da sich die Kieselsäure mit der Kautschukmischung i.a. nicht ohne weiteres befriedigend verbinden läßt, werden sogenannte Kupplungsmittel, z. B. Silankupplungsmittel, zugegeben, mit denen die Kieselsäure in aller Regel vorbehandelt wird (siehe z.B.: "S. Wolff "Optimization of Silane-Silica OTR Compounds. Part 1: Variations of Mixing Temperature and Time During the Modification of Silica with Bis(3-triethoxysilylpropyl)-tetrasulfide", Rubber Chem. Technol. 55, 967-989 (1982)"). Gerade für das Füllen halogenierter Kautschuke konnten auf diese Weise (d.h. durch Verblenden des halogenierten Kautschuks mit einer Mischung aus Silica und Silankuppler oder der mit Silankuppler behandelten Kieselsäure) jedoch keine guten Ergebnisse bezüglich der geforderten Eigenschaften des erzeugten Elastomers erzielt werden.

Zwar ist es andererseits auch bekannt, halogenierte Butylkautschuke oder z..B. auch Halomethylstyrol-Isobutylkautschuk-Copolymere auf verschiedene Weise zu funktionalisieren, was selbstverständlich auch mit Silanen möglich ist, die entsprechende für eine Substitutionsreaktion am Halogen geeignete Gruppen tragen; eine Funktionalisierung in Lösung, die selbst dann noch unvollständig verlaufen kann, ist jedoch aufwendig, da das gesamte Prepolymer - d.h. der noch nicht vulkanisierte Halogenkautschuk - in dem Lösungsmittel vor der Reaktion gequollen und das Lösungsmittel anschließend wieder entfernt werden muß.

Überraschenderweise wurde jedoch gefunden, daß sich eine Elastomermischung mit den gewünschten Eigenschaften dadurch erhalten läßt, daß ein halogensubstituiertes kautschukelastisches Homo- oder Copolymer zunächst speziell mit einem Aminosilankuppler in Substanz umgesetzt, d.h. lösungsmittelfrei verblendet, wird, und daß danach die Kieselsäure oder eine anderer OH-Gruppen enthaltender Kautschuk-Füllstoff zugegeben wird. Entsprechende Versuche mit (endständig) OH-Gruppen tragenden Silankupplungsmitteln, wie sie sonst zur Modifizierung von Silica viel und mit Erfolg verwendet werden, erforderten dagegen lange Reaktionszeiten und hohe Temperaturen (wenigstens 2 Stunden, 180 °C) und führten in realer Mischung, d.h. bei Verarbeitung unter für das Kautschuk-Verblenden (Compoundieren) üblichen Bedingungen, zu nur schlechten Reaktionsausbeuten bezüglich der Anbindung, wie u.a. durch NMR-Spektroskopie gezeigt werden konnte.

Das Verblenden des teilhalogenierten Kautschuks zunächst mit dem Aminosilankuppler und anschließend mit einem OH-Gruppen tragenden Füllstoff wie Kieselsäure führt dagegen in kürzester Zeit zu überraschend guten Ergebnissen, insbesondere bezüglich der Module, wobei die vorgeschaltete Vermischung des Aminosilan-Kupplers über kurze Zeit (z.B. wenige Sekunden) bei geringen Temperaturen (z.B. bis zu 100°C) und die anschließende Herstellung der Grundmischung durch Einmischen des Füllstoffs bei Temperaturen bis zu 150°C über Zeiträume, wie für die Kautschuk-Compoundierung üblich, z.B. 5 bis 10 Minuten, erfolgen kann. Die auf diese Weise erhaltenen Elastomer-Mischungen unterscheiden sich demnach in ihrem Vernetzungsmuster von entsprechend zusammengesetzten, jedoch mit anderer Reihenfolge der Verfahrensschritte hergestellten Elastomeren. Die Unterschiede sind an den Eigenschaften, insbesondere den Werten für die Module, ablesbar, wie dies später noch anhand der Beispiele zu erkennen sein wird.

Vorzugsweise kann das Aminoalkoxysilan ein aliphatisches Organosilan mit einem Alkyl, das 2 bis 10 C-Atome umfaßt, sein. Dabei bedeutet Alkyl insbesondere, Methyl, Ethyl, Propyl, Isopropyl, Butyl, Isobutyl, tert.-Butyl, Pentyl, Isopentyl, Cyclopentyl, Hexyl, Isohexyl, Cyclohexyl, Heptyl, Isoheptyl, Cycloheptyl, Octyl und seine Isomeren, Nonyl und seine Isomeren, Decyl und seine Isomeren. Das Aminosilan kann mehr als eine Aminogruppe pro Molekül des Kupplungsreagenzes, bzw. bei einem oligomeren oder polymeren Silankuppler pro Wiederholungseinheit, enthalten. Weiter vorzugsweise ist das Aminosilan ein Mono- oder Di-Aminosilan. In derzeit bevorzugter Ausführungsform ist das Aminoalkoxysilan oder Aminopropyltriethoxysilan.

Außer Kieselsäure kann der Kautschuk-Füller auch ein anderer OH-Gruppen tragender Füllstoff, z.B. Aluminiumhydroxid, sein. Im Falle von Kieselsäure kann eine der im Stand der Technik hinlänglich bekannten Formen von Kieselsäure verwendet werden. Eine hohe Oberfläche ist vorteilhaft.

Das halogensubstituierte Polymer ist vorzugsweise ein mit Chlor oder Brom substituiertes Polymer. Homopolymere können aus der Gruppe der modifizierten Naturkautschuke und Dienelastomeren ausgewählt sein. Copolymere können Copolymerisate aus Ethylen, Propylen, Butadien, Isobutylen, Carboxylkautschuken, Epoxykautschuken und Styrol - in beliebiger Kombination - sein. Insbesondere sind auch Copolymere aus Butylkautschuken mit para-Brommethylstyrol geeignet, wobei EXXPRO® ein Terpolymer aus Isobutylen, para-Methyl-Styrol und para-Brom-Methylstyrol, besonders bevorzugt ist.

Der Vernetzungsgrad kann über die Mengenverhältnisse zwischen Polymer, Aminosilan und Füllstoff gesteuert werden. Das Aminosilan wird bevorzugt in einer Menge von 1 - 100 Mol.%, vorzugsweise 1,5-15 Mol.%, bezogen auf den Bromgehalt des Polymers eingesetzt.

Bei einer hohen Menge Aminosilankuppler kann bereits in einem Verblendungsschritt ein hochvernetztes Elastomer erhalten werden, das direkt weiterverarbeitet werden kann, eine weitere Vulkanisation mit einem zusätzlichen Vulkanisationsmittel , z.B. Schwefel, kann sich dann erübrigen.

Die vulkanisierbare Elastomer-(Grund)Mischung kann zusätzlich eine oder mehrere der folgenden Komponenten enthalten:
- für Kauschuk übliche Vulkanisations-Aktivatoren oder - Promotoren;
- Vulkanisations-Verzögerer;
- Vulkanisations-Beschleuniger;
- weitere Zusatzstoffe, wie Alterungs-, Ermüdungs-, Lichtschutzmittel oder dergleichen.

Übliche Vulkanisations-Verzögerer, -Beschleuniger,-Aktivatoren, etc. sind dem Fachmann aus der einschlägigen Literatur und im Rahmen seines Fachwissens auf diesem Gebiet bekannt und brauchen daher hier nicht näher ausgeführt zu werden.

Das Verfahren zur Herstellung eines Elastomeren umfaßt zumindest die oben bereits ausführlich dargestellten Schritte zur Erzeugung einer gegebenenfalls zu vulkanisierenden Kautschuk-Grundmischung. Das Mischen der Grundmischung erfolgt durch Verblenden oder Mischen bzw. Compoundieren in einem hierfür geeigneten und in der Kautschukindustrie üblichen Mischer über einen Misch-Zeitraum von vorzugsweise bis zu 15 Minuten - wobei unter Umständen (d.h. bei bestimmten Aminen und bestimmten Konzentrationsverhältnissen) geringe Zeiten genügen können - und vorzugsweise bei einer Temperatur zwischen 60 und 150 °C.

Die vulkanisierbare Elastomer-(Grund-)Mischung kann dann in an sich bekannter Weise zu einer Fertigmischung weiterverarbeitet werden, wobei vorzugsweise eine oder mehrere der folgenden Komponenten zugegeben werden:
- Schwefel oder ein anderes chemisches Vulkanisationsmittel,
- Vulkanisationsbeschleuniger;
- Vulkanisationsverzögerer;
- weitere bei der Vulkanisation übliche Zusatzstoffe.
Diese Fertigmischung wird unmittelbar nach der Vulkanisation zu einem Elastomer-Produkt weiterverarbeitet. Das Elastomer-Produkt kann insbesondere bei einem Fahrzeugluftreifen Verwendung finden.

Im folgenden wird die Erfindung anhand einiger Ausführungsbeispiele näher erläutert:

### BEISPIELE

### EXPERIMENT 1

### 1. Allgemeines

Die folgende Tabelle zeigt die Rezepturen der Mischungen, Mischung 1 enthält außer dem Polymer und Kieselsäure nur die üblichen Zusätze, wie zum Beispiel Vulkanisationschemikalien und dient als Referenzmischung. Mischung 2 enthält 0,65 phr Aminosilan. Das Polymer wurde bei 80°C mit dem Silan umgesetzt. Dann wurde die Temperatur auf 130°C erhöht und die Grundmischung hergestellt. In der Mischung wurde das Silan zusammen mit der Kieselsäure zugesetzt.

| | Referenz 1 | 2 | 3 |
|---|---|---|---|
| EXXPRO^{®} | 100 | 100 | 100 |
| Kieselsäure | 35 | 35 | 35 |
| Aminopropyltriethoxysilan | | 0,65 | 0,65 |
| Stearinsäure | 1,5 | 1,5 | 1,5 |
| Zinkoxid | 2 | 2 | 2 |
| Schwefel | 2 | 2 | 2 |
| CBS | 1,5 | 1,5 | 1,5 |
| DPG | 1 | 1 | 1 |

| | | | |
|---|---|---|---|
| Alle Angaben in phr 0,65 phr Aminosilan entsprechen 7,5% der notwendigen stöchiometrischen Menge, bezogen auf den Bromgehalt im Polymer. EXXPRO® : Terpolymer mit 1,8% Brom (Hersteller: EXXON) Kieselsäure: VN 3 (Hersteller: DEGUSSA) Aminopropyltriethoxysilan: FLUKA Feinchemikalien Alle anderen Chemikalien sind kommerziell erhältliche Standard-produkte | | | |

a) Mischverfahren: für Mischung 1 und Mischung 3:
Grundmischung: Polymer, Kieselsäure, Silan, Zinkoxid und Stearinsäure;
Temperatur: 130°C, Mischzeit: 7 Minuten
Fertigmischung: Schwefel, CBS and DPG;
Temperatur: 80°C, Mischzeit: 5 Minuten

b) Mischverfahren für: Mischung 2; Polymer and Aminosilan wurden zunächst 30 Sekunden bei 80°C gemischt; im übrigen wurde wie unter a) verfahren.

### 2. Ergebnisse

Alle Prüfungen am Vulkanisat wurden nach den bekannten DIN-Vorschriften durchgeführt. Die folgende Tabelle zeigt die Prüfergebnisse:

| | Referenz 1 | 2 | 3 |
|---|---|---|---|
| Reißfestigkeit [Mpa] | 10,0 | 7,3 | 7,8 |
| Bruchdehnung [%] | 569 | 334 | 408 |
| Modul 50%[Mpa] | 1,19 | 1,29 | 1,13 |
| Modul 100% [Mpa] | 1,72 | 2,08 | 1,78 |
| Modul 200% [Mpa] | 3,06 | 4,40 | 3,54 |
| Modul 300% [Mpa] | 4,88 | 7,12 | 5,90 |
| Härte 23°C [Shore A] | 57 | 60 | 57 |
| Bruchenergie [J/cm³] | 24,0 | 10,9 | 13,8 |
| Druckverformungsrest 23°C [%] | 12 | 11 | 12 |
| Druckverformungsrest 100°C [%] | 63 | 53 | 55 |

Die Ergebnisse zeigen, daß der Einsatz von Aminopropyltriethoxysilan zu höheren Moduln führt. Die Reißfestigkeit und Bruchdehnung fallen dagegen ab. Der Druckverformungsrest bei 100°C wird signifikant verbessert. Ein Vergleich der Mischungen 2 und 3 zeigt, daß Mischung 2 mit dem modifizierten Polymer Vorteile bezüglich Moduln und Druckverformungsrest gegenüber Mischung 3 zeigt.

### EXPERIMENT 2

Im folgenden werden zwei weitere Mischversuche angegeben, die zeigen, daß die oben erhaltenen Ergebnisse reproduzierbar für verschiedene Konzentrationen erhalten werden:
Mischvorschrift 1:

| | |
|---|---|
| Polymer | 0"-30" |
| Silica, Öl, Silan | 30"-3'00" |
| Zinkoxid, Stearinsäure | 3'00"-5'00" |
| Temperatur | 130°C |

Mischvorschrift 2:

| | |
|---|---|
| Polymer + Silan in öl | 0"-30" |
| Mischtemperatur für diesen | 80°C |
| Schritt | |
| Silica | 0"-3'00" |
| Zinkoxid, Stearinsäure | 3'00"-5'00" |
| Mischtemperatur | 130°C |

Fertigmischung

| | |
|---|---|
| Schwefel, Beschleuniger | 0"-5'00" |
| Temperatur: | 80°C |

| | Referenz | 1 | 2 | 3 | 4 |
|---|---|---|---|---|---|
| EXXPRO | 100 | < | < | < | < |
| Kieselsäure | 35 | < | < | < | < |
| Aminosilan | | 0,13 | 0,39 | 0,13 | 0,39 |
| naphthenisches Öl | 5 | < | < | < | < |
| Zinkoxid | 2 | < | < | < | < |
| Stearinsäure | 1,5 | < | < | < | < |
| Schwefel | 2 | < | < | < | < |
| DPG | 1 | < | < | < | < |
| CBS | 1,5 | < | < | < | < |

| | | | | | |
|---|---|---|---|---|---|
| EXXPRO®: Terpolymer mit 1,8% Brom (Hersteller: EXXON) Aminosilan: Aminopropyltriethoxysilan Referenz, 1 und 2 wurden nach Mischvorschrift 1 gemischt, 3 und 4 nach Mischvorschrift 2 Folgende Ergebnisse wurden erhalten: | | | | | |

| | Refer. | 1 | 2 | 3 | 4 |
|---|---|---|---|---|---|
| Reißfestigkeit [MPa] | 8,4 | 5,7 | 7,5 | 6,6 | 5,7 |
| Bruchdehnung [%] | 522 | 383 | 401 | 394 | 307 |
| Modul 100% [MPa] | 1,55 | 1,71 | 1,88 | 1,92 | 2,23 |
| Modul 300% [MPa] | 4,32 | 4,71 | 5,83 | 5,28 | - |
| Härte [Shore A] | 55 | 57 | 58 | 58 | 58 |
| Rückprallelastizität 23°C [%] | 12 | 12 | 13 | 13 | 13 |
| Druckverformungsrest 23°C [%] | 11 | 11 | 10 | 10 | 8 |
| Druckverformungsrest 100°C [%] | 57 | 55 | 51 | 55 | 45 |

Die Proben wurden 60 min. bei 160°C vulkanisiert.

Die gewählten Konzentrationen an Aminosilan entsprechen folgenden Mengen: 0,13 phr entsprechen 1,5 % der notwendigen stöchiometrischen Menge, bezogen auf Brom im Polymer, 0,39 phr entsprechen 4,5%.

Die Beispiele 1 und 3 zeigen, daß die Mischung 3 höhere Spannungswerte hat. Die Druckverformungsreste differenzieren jedoch nicht. Ein Vergleich der Mischungen 2 und 4 zeigt deutliche Vorteile im Spannungswert bei 100% und im Druckverformungsrest bei 100°C.

## Patentansprüche

1. Vulkanisierbare Elastomer-Mischung herstellbar durch Verblenden wenigstens der folgenden Komponenten in der angegebenen Reihenfolge:
a) eines halogensubstituierten kautschukelastischen Homo- oder Copolymers mit
b) einem Aminoalkoxysilan mit wengistens einer Aminogruppe je Molekül in einer Menge, daß das Verhältnis Amino:Halogen-Gruppen 1 - 100 Mol.% ist, und danach mit
c) einem OH-Gruppen enthaltenden Füllstoff.

2. Vulkanisierbare Elastomer-Mischung nach Anspruch 1, **dadurch gekennzeichnet, daß** das Aminoalkoxysilan ein aliphatisches Organosilan ist mit einer Alkylkette, die 2 bis 10 C-Atome umfaßt.

3. Vulkanisierbare Elastomer-Mischung nach Anspruch 2, **dadurch gekennzeichnet, daß** das Aminoalkoxysilan Aminopropyltriethoxysilan ist.

4. Vulkanisierbare Elastomer-Mischung nach einem der Ansprüche 1 bis 3, **dadurch gekennzeichnet, daß** der OH-Gruppen tragende Füllstoff Kieselsäure oder Aluminiumhydroxid ist.

5. Vulkanisierbare Elastomer-Mischung nach einem der Ansprüche 1 bis 4, **dadurch gekennzeichnet, daß** das halogensubstituierte Polymer ein mit Chlor oder Brom substituiertes Polymer ist.

6. Vulkanisierbare Elastomer-Mischung nach einem der Ansprüche 1 bis 5, **dadurch gekennzeichnet, daß** die Homopolymere aus der Gruppe der modifizierten Naturkautschuke und Dienelastomeren ausgewählt sind und im Falle von Copolymeren deren Bestandteile aus Ethylen, Propylen, Butadien, Isobutylen, Carboxylkautschuken, Epoxykautschuken, jeweils copolymerisiert untereinander oder mit Styrol, ausgewählt sind.

7. Vulkanisierbare Elastomer-Mischung nach einem der Ansprüche 1 bis 6, **dadurch gekennzeichnet, daß** sie zusätzlich eine oder mehrere der folgenden Komponenten enthält:
- für Kautschuk übliche Vulkanisations-Aktivatoren oder-Promotoren;
- Vulkanisations-Verzögerer;
- Vulkanisations-Beschleuniger;
- weitere Zusatzstoffe, wie Alterungs-, Ermüdungs-, Lichtschutzmittel oder dergl..

8. Verfahren zur Herstellung eines Elastomeren, welches folgenden Verfahrensablauf umfasst:
Herstellung einer vulkanisierbaren Grundmischung durch lösungsmittelfreies Verblenden wenigstens der folgenden Komponenten in der angegebenen Reihenfolge:
a) eines halogensubstituierten kautschukelastischen Homo- oder Copolymers mit
b) einem Aminoalkoxysilan mit wenigstens einer Aminogruppe je Molekül in einer Menge, daß das Verhältnis Amino: Halogen-Gruppen 1 - 100 Mol.% ist, und danach mit
c) einem OH-Gruppen enthaltenden Füller.

9. Verfahren nach Anspruch 8, **dadurch gekennzeichnet, daß** als Aminoalkoxysilan ein ein C2- bis C10-Alkyl umfaßendes aliphatisches Organosilan verwendet wird.

10. Verfahren nach Anspruch 9, **dadurch gekennzeichnet, daß** Aminopropyltriethoxysilan verwendet wird.

11. Verfahren nach einem der Ansprüche 8 bis 10, **dadurch gekennzeichnet, daß** als OH-Gruppen tragender Füllstoff Kieselsäure oder Aluminiumhydroxid eingesetzt wird.

12. Verfahren nach einem der Ansprüche 8 bis 11, **dadurch gekennzeichnet, daß** als halogensubstituiertes Polymer ein mit Chlor oder Brom substituiertes Polymer verwendet wird.

13. Verfahren nach einem der Ansprüche 8 bis 12, **dadurch gekennzeichnet, daß** die Homopolymere aus der Gruppe der modifizierten Naturkautschuke und Dienelastomeren ausgewählt werden und im Falle von Copolymeren, deren Bestandteile aus Ethylen, Propylen, Butadien, Isobutylen, Carboxylkautschuken, Epoxykautschuken, die jeweils untereinander oder mit Styrol copolymerisiert sind, ausgewählt werden.

14. Verfahren nach einem der Ansprüche 8 bis 13, **dadurch gekennzeichnet, daß** in die Grundmischung zusätzlich eine oder mehrere der folgenden Komponenten eingemischt werden:
- für Kautschuk übliche Vulkanisations-Aktivatoren oder-Promotoren;
- Vulkanisations-Verzögerer;
- Vulkanisations-Beschleuniger;
- weitere bei vulkanisierbaren Mischungen übliche Zusatzstoffe, wie Alterungs-, Ermüdungs-, Lichtschutzmittel oder dergl..

15. Verfahren nach einem der Ansprüche 8 bis 14, **dadurch gekennzeichnet**, da in das Polymer zunächst das Aminosilan eingemischt wird, über einen Zeitraum zwischen wenigen Sekunden und 2 min., und danach die Grundmischung durch Einmischen des Füllstoffes bei einer Temperatur zwischen 60 und 150°C über einen Zeitraum von bis zu 15 Minuten, vorzugsweise bis zu 8 Minuten, hergestellt wird.

16. Verfahren nach einem der Ansprüche 8 bis 15, **dadurch gekennzeichnet, daß** die Grundmischung mit einer oder mehreren der folgenden Komponenten:
- Schwefel;
- Vulkanisationsbeschleuniger;
- Vulkanisationsverzögerer;
- Vulkanisationsaktivatoren;
- weitere bei der Vulkanisation übliche Zusatzstoffe zu einer Fertigmischung verblendet und danach zu einem Elastomer-Produkt weiterverarbeitet wird.

17. Fahrzeugluftreifen, welcher wenigstens ein Elastomer umfasst, das hergestellt ist mit einem Verfahren nach einem der Ansprüche 8 bis 16.
